# FASCICULE DE BREVET EUROPEEN

(11) **EP 0 855 218 B1**
(45) Date de publication et mention de la délivrance du brevet: **24.04.2002**
(21) Numéro de dépôt: 98400099.2
(22) Date de dépôt: 20.01.1998
(51) Int. Cl.: B01J 29/70, C01B 39/48

(54) **Zéolithe IM-5 désaluminée**
Dealuminierter Zeolith IM-5
Dealuminated IM-5 type zeolit

(30) Priorité: 24.01.1997 FR 9700863
(43) Date de publication de la demande: 29.07.1998
(73) Titulaire: INSTITUT FRANCAIS DU PETROLE, 92500 Rueil Malmaison (FR)
(72) Inventeur: Benazzi, Eric, 78400 Chatou (FR); Cauffriez, Hervé, 78380 Bougival (FR)

(56) Documents cités:
- EP-A- 0 095 304
- EP-A- 0 172 686
- EP-A- 0 190 949
- EP-A- 0 463 768
- EP-A- 0 488 867
- EP-A- 0 825 152
- WO-A-93/02994
- WO-A-98/17581
- US-A- 5 043 307
- DATABASE WPI Section Ch, Week 8642 Derwent Publications Ltd., London, GB; Class E14, AN 86-275939 XP002054889 & JP 61 201 618 A (SHINNENRYOYU KAIHATSU GIJUTSU) , 6 septembre 1986

## Description

La présente invention concerne une zéolithe IM-5 désaluminée et tout catalyseur comprenant ladite zéolithe au moins en partie sous forme acide. L'invention concerne aussi l'utilisation dans un procédé de conversion d'hydrocarbures dudit catalyseur.

L'art antérieur est illustré par les brevets suivants : EP-A-190 949, WO-A-9302994, EP-A-172 686, EP-A-095 304, EP-A-488 867 et US 5 043 307.

La zéolithe IM-5 forme hydrogène selon la présente invention, possède une structure qui n'a pas encore été élucidée. Elle est décrite dans la demande de brevet français FR 2 754 809 A (WO 9 817 581 A) dont une description partielle est incorporée ici à titre de référence

La nouvelle structure zéolithique, nommée IM-5, a la composition chimique, exprimée sur une base anhydre, en termes de rapports molaires d'oxydes, par la formule suivante :

100 XO₂, m Y₂O₃, p R_{2/n}O,

où m est égal ou inférieur à 10,
p est égal ou inférieur à 20,
R représente un ou plusieurs cations de valence n,
X est le silicium et/ou le germanium, de préférence le silicium,
Y est choisi dans le groupe formé par les éléments suivants : l'aluminium, le fer, le gallium, le bore, le titane, de préférence Y est l'aluminium,
et elle est caractérisée par le fait qu'elle présente, sous forme brute de synthèse, un diagramme de diffraction X comportant les raies présentées dans le tableau 1.

La zéolithe IM-5 dans sa forme hydrogène, désignée H-IM-5, est obtenue par calcination(s) et/ou échange(s) ionique(s) comme explicité ci-après. La zéolithe H-IM-5 présente un diagramme de diffraction des rayons X comportant les raies présentées dans le tableau 2.

**Tableau 1 :**

| Tableau de diffraction des rayons X de la zéolithe IM-5 brute de synthèse | |
|---|---|
| dₕₖₗ (Å) | l/lₘₐₓ |
| 11,8±0,35 | F à TF(1) |
| 11,5±0,30 | F à TF(1) |
| 11,25±0,30 | Fà TF(1) |
| 9,95±0,20 | m à F |
| 9,50±0,15 | m à F |
| 7,08±0,12 | f à m |
| 6,04±0,10 | tf à f |
| 5,75±0,10 | f |
| 5,65±0,10 | f |
| 5,50±0,10 | tf |
| 5,35±0,10 | tf |
| 5,03±0,09 | tf |
| 4,72±0,08 | f à m |
| 4,55±0,07 | f |
| 4,26±0,07 | tf |
| 3,92±0,07 | F à TF (2) |
| 3,94±0,07 | TF (2) |
| 3,85±0,05 | TF (2) |
| 3,78±0,04 | F à TF (2) |
| 3,67±0,04 | m à F |
| 3,55±0,03 | m à F |
| 3,37±0,02 | f |
| 3,30±0,015 | f |
| 3,099±0,012 | f à m |
| 2,970±0,007 | tf à f |
| 2,815±0,005 | tf |
| 2,720±0,005 | tf |

| | |
|---|---|
| (1) Raies faisant partie du même massif, | |
| (2) Raies faisant partie du même massif. | |

**Tableau 2 :**

| Tableau de diffraction des rayons X de la zéolithe IM-5 sous forme H, H-IM-5, obtenue par calcination | |
|---|---|
| dₕₖₗ (Å) | l/lₘₐₓ |
| 11,8±0,30 | F à TF(1) |
| 11,45±0,25 | TF(1) |
| 11,20±0,20 | F à TF(1) |
| 9,90±0,15 | m à F |
| 9,50±0,15 | m à F |
| 7,06±0,12 | f à m |
| 6,01±0,10 | tf à f |
| 5,70±0,10 | f |
| 5,30±0,10 | tf |
| 5,03±0,09 | tf |
| 4,71±0,08 | f |
| 4,25±0,07 | tf |
| 3,87±0,07 | m à F (2) |
| 3,81±0,05 | m à F (2) |
| 3,76±0,04 | m à F (2) |
| 3,67±0,04 | f à m |
| 3,54±0,04 | m à F |
| 3,37±0,03 | f |
| 3,316±0,015 | f |
| 3,103±0,012 | f |
| 3,080±0,010 | f à m |
| 2,950±0,010 | tf à f |
| 2,880±0,007 | tf |
| 2,790±0,005 | tf |
| 2,590±0,005 | tf |

| | |
|---|---|
| (1) Raies faisant partie du même massif, | |
| (2) Raies faisant partie du même massif. | |

Ces diagrammes sont obtenus à l'aide d'un diffractomètre en utilisant la méthode classique des poudres avec le rayonnement Ka du cuivre. A partir de la position des pics de diffraction représentée par l'angle 2θ, on calcule, par la relation de Bragg, les équidistances réticulaires dhkl caractéristiques de l'échantillon. Le calcul de l'intensité se fait sur la base d'une échelle d'intensité relative sur laquelle on attribue une valeur de 100 à la raie présentant l'intensité la plus forte sur le diagramme de diffraction X :
très faible (tf) signifie inférieure à 10,
faible (f) signifie inférieure à 20,
moyenne (m) signifie comprise entre 20 et 40,
forte (F) signifie comprise entre 40 et 60,
très forte (TF) signifie supérieure à 60.

Les diffractogrammes X à partir desquels ces données ont été obtenues (espacement d et intensités relatives) sont caractérisés par de larges réflexions avec de nombreux pics formant des épaulements sur d'autres pics d'intensité supérieure. Il peut arriver que certains épaulements, ou tous les épaulements, ne soient pas résolus. Ceci peut se produire pour des échantillons faiblement cristallins ou des échantillons au sein desquels les cristaux sont suffisamment petits pour donner un élargissement significatif des rayons X. Cela peut également être le cas lorsque l'équipement ou les conditions mis en oeuvre pour obtenir le diagramme diffèrent de ceux utilisés ici.

Dans le cadre de la définition de la compositon chimique donnée ci-dessus, m est généralement compris entre 0,1 et 10, de préférence entre 0,3 et 9, et de façon encore plus préférée entre 0,5 et 8 ; il apparaît que la zéolithe IM-5 s'obtient généralement le plus aisément sous une forme très pure lorsque m est compris entre 0,8 et 8.

On estime que la zéolithe IM-5 possède une nouvelle structure de base ou topologie qui est caractérisée par son diagramme de diffraction X. La zéolithe IM-5 sous sa "forme brute de synthèse" possède sensiblement les caractéristiques obtenues par diffraction X, présentées dans le tableau 1 (voir aussi un exemple de diffractogramme en figure 1), et se distingue ainsi des zéolithes connues. De même la zéolithe H-IM5, obtenue par calcination et/ou échanges ioniques, possède sensiblement les caractéristiques présentées dans le tableau 2 (voir aussi un exemple de diffractogramme en figure 2). L'invention décrite dans la demande de brevet français FR 2 754 809 A comprend aussi toute zéolithe de même type structural que celui de la zéolithe IM-5.

Par ailleurs, certaines applications catalytiques nécessitent un ajustement de la stabilité thermique et de l'acidité de la zéolithe à la réaction envisagée. Un des moyens pour optimiser l'acidité d'une zéolithe est de diminuer la quantité d'aluminium présent dans sa charpente. Le rapport Si/Al de la charpente peut être réglé à la synthèse ou bien après la synthèse. Dans ce dernier cas, l'opération dite de désalumination, doit être effectuée en détruisant le moins possible la structure cristalline de la zéolithe.

Il est connu de l'homme du métier qu'une désalumination de la charpente de la zéolithe conduit à un solide thermiquement plus stable. Cependant, les traitements de désalumination que subissent les zéolithes conduisent à la formation d'espèces aluminiques extra-charpente qui peuvent obstruer la microporosité de la zéolithe si ces dernières ne sont pas éliminées. Une désalumination contrôlée et réalisée hors unité permet de régler exactement le taux de désalumination de la charpente de la zéolithe et permet aussi d'éliminer les espèces aluminiques extra-charpente qui obstruent la microporosité. L'étape de désalumination post-synthèse peut être réalisée par toute technique connue de l'homme du métier.

La présente invention concerne une zéolithe IM-5, comprenant du silicium et au moins un élément T choisi dans le groupe formé par l'aluminium, le fer, le gallium, et le bore, de préférence l'aluminium, caractérisée en ce qu'elle a été désaluminée et en ce qu'elle possède un rapport Si/T atomique global supérieur à 10, de manière préférée supérieur à 15, et de manière encore plus préférée compris entre 20 et 400.

La présente invention concerne aussi un catalyseur comportant au moins une zéolithe IM-5, éventuellement désaluminée et au moins en partie, de préférence pratiquement totalement, sous forme acide, comprenant du silicium et au moins un élément T choisi dans le groupe formé par l'aluminium, le fer, le gallium, et le bore, de préférence l'aluminium, et au moins une matrice (ou liant). De préférence, le rapport Si/T atomique global de ladite zéolithe IM-5 est supérieur à environ 10, de manière préférée supérieur à environ 15, et de manière encore plus préférée entre 20 et 400.

La matrice est choisie généralement parmi les éléments du groupe formé par les argiles (par exemple parmi les argiles naturelles telles que le kaolin ou la bentonite), la magnésie, les alumines, les silices, l'oxyde de titane, l'oxyde de bore, la zircone, les phosphates d'aluminium, les phosphates de titane, les phosphates de zirconium, les silice-alumines et le charbon, de préférence parmi les éléments du groupe formé par les alumines et les argiles.

Lorsqu'elle est comprise dans le catalyseur selon l'invention, la zéolithe IM-5 est au moins en partie, de préférence pratiquement totalement, sous forme acide, c'est-à-dire sous forme hydrogène (H⁺). Le rapport atomique Na/T est généralement inférieur à 0,45 et de préférence inférieur à 0,30 et de manière encore plus préférée inférieur à 0,15.

Le rapport T/Al global de la zéolithe ainsi que la composition chimique des échantillons sont déterminés par fluorescence X et absorption atomique

Il est aussi possible d'estimer le volume microporeux à partir de la quantité d'azote adsorbée à 77 K pour une pression partielle P/Po égale à 0,19, à titre indicatif.

La présente invention concerne aussi la préparation de ladite zéolithe IM-5 désaluminée ainsi que la préparation dudit catalyseur compreant au moins une zéolithe IM-5 désaluminée au moins en partie sous forme acide.

Pour préparer la zéolithe IM-5 désaluminée selon l'invention, dans le cas préféré où T est Al, au moins deux méthodes de désalumination peuvent être employées, à partir de la zéolithe IM-5 brute de synthèse comprenant du structurant organique. Elles sont décrites ci-après. Mais toute autre méthode connue de l'homme du métier entre aussi dans le cadre de l'invention.

La première méthode dite de l'attaque acide directe comprend une première étape de calcination sous flux d'air sec, à une température généralement comprise entre environ 450 et 550°C, qui a pour but d'éliminer le structurant organique présent dans la microporosité de la zéolithe, suivie d'une étape de traitement par une solution aqueuse d'un acide minéral tel que HNO₃ ou HCI ou organique tel que CH₃CO₂H. Cette dernière étape peut être répétée autant de fois qu'il est nécessaire afin d'obtenir le niveau de désalumination voulu. Entre ces deux étapes il est possible de réaliser un ou plusieurs échanges ioniques par au moins une solution NH₄NO₃, de manière à éliminer au moins en partie, de préférence pratiquement totalement, le cation alcalin, en particulier le sodium. De même, à la fin du traitement de désalumination par attaque acide directe, il est éventuellement possible de réaliser un ou plusieurs échanges ioniques par au moins une solution NH₄NO₃, de manière à éliminer les cations alcalins résiduels et en particulier le sodium.

Pour atteindre le rapport Si/Al désiré, il est nécessaire de bien choisir les conditions opératoires ; de ce point de vue les paramètres les plus critiques sont la température de traitement par la solution aqueuse d'acide, la concentration dudit acide, la nature dudit acide, le rapport entre la quantité de solution acide et la masse de zéolithe traitée, la durée de traitement et le nombre de traitement réalisés.

La deuxième méthode dite de traitement thermique (en particulier à la vapeur d'eau ou "steaming") + attaque acide, comprend, dans un premier temps, la calcination sous flux d'air sec, à une température généralement comprise entre environ 450 et 550°C, qui a pour but d'éliminer le structurant organique occlus dans la microporosité de la zéolithe. Puis le solide ainsi obtenu est soumis à un ou plusieurs échanges ioniques par au moins une solution NH₄NO₃, de manière à éliminer au moins en partie, de préférence pratiquement totalement, le cation alcalin, en particulier le sodium, présent en position cationique dans la zéolithe. La zéolithe ainsi obtenue est soumise à au moins un cycle de désalumination de charpente, comportant au moins un traitement thermique réalisé, éventuellement et de préférence en présence de vapeur d'eau, à une température généralement comprise entre 550 et 900°C, et éventuellement suivie d'au moins une attaque acide par une solution aqueuse d'un acide minéral ou organique. Les conditions de calcination en présence de vapeur d'eau (température, pression de vapeur d'eau et durée du traitement) ainsi que les conditions d'attaque acide post-calcination (durée de l'attaque, concentration de l'acide, nature de l'acide utilisé et le rapport entre le volume d'acide et la masse de zéolithe), sont adaptées de manière à obtenir le niveau de désalumination souhaité. Dans le même but on peut aussi jouer sur le nombre de cycles traitement thermique-attaque acide qui sont effectués.

Dans le cas préféré où T est Al, le cycle de désalumination de la charpente, comportant au moins une étape de traitement thermique réalisé, éventuellement et de préférence, en présence de vapeur d'eau et au moins une étape d'attaque en milieu acide de la zéolithe IM-5, peut être répété autant de fois qu'il est nécessaire pour obtenir la zéolithe IM-5 désaluminée possédant les caractéristiques désirées. De même, suite au traitement thermique réalisé, éventuellement et de préférence en présence de vapeur d'eau, plusieurs attaques acides successives, avec des solutions en acide de concentrations différentes, peuvent être opérées.

Une variante de cette deuxième méthode de calcination peut consister à réaliser le traitement thermique de la zéolithe IM-5 contenant le structurant organique, à une température généralement comprise entre 550 et 850°C, éventuellement et de préférence en présence de vapeur d'eau. Dans ce cas les étapes de calcination du structurant organique et de désalumination de la charpente sont réalisées simultanément. Puis, la zéolithe est éventuellement traitée par au moins une solution aqueuse d'un acide minéral (par exemple de HNO₃ ou de HCI) ou organique(CH₃CO₂H par exemple). Enfin, le solide ainsi obtenu peut être éventuellement soumis à au moins un échange ionique par au moins une solution NH₄NO₃, de manière à éliminer pratiquement tout cation alcalin, en particulier le sodium, présent en position cationique dans la zéolithe.

La préparation du catalyseur peut être effectuée selon toute méthode connue de l'homme du métier. En général, elle est obtenue par mélange de la matrice et de la zéolithe puis par mise en forme. L'élément éventuel de l'ensemble formé par les groupe lB et VIII de la classification périodique des éléments peut être introduit soit avant la mise en forme, ou bien lors du mélange, ou bien sur la zéolithe elle même avant de la mélanger, ou bien, et de préférence, après la mise en forme. La mise en forme est généralement suivie d'une calcination, généralement à une température comprise entre 250 et 600 °C. L'élément éventuel de l'ensemble formé par les groupes lB et VIII de la classification périodique des éléments peut être introduit après ladite calcination. Dans tous les cas, ledit élément est généralement déposé au choix soit, de préférence, pratiquement totalement sur la zéolithe, soit pratiquement totalement sur la matrice, soit en partie sur la zéolithe et en partie sur la matrice, ce choix s'effectuant de la manière qui est connue de l'homme du métier, par les paramètres utilisés lors dudit dépôt, comme par exemple la nature du précurseur choisi pour effectuer ledit dépôt.

L'élément des groupes lB ou VIII, de préférence choisi dans le groupe formé par Ag, Ni et Pt, de préférence Ni ou Pt, peut également être déposé sur le mélange zéolithe-matrice préalablement mis en forme par tout procédé connu de l'homme de l'art. Un tel dépôt est généralement effectué par la technique d'imprégnation à sec, d'échange(s) ionique(s) ou de coprécipitation. Dans le cas de l'échange ionique à partir de précurseurs à base d'argent, de nickel ou de platine, on utilise habituellement des sels d'argent tels que les chlorures ou les nitrates, un complexe tétramine du platine, ou des sels de nickel tels que les chlorures, les nitrates, les acétates ou les formiates. Cette technique d'échange cationique peut également être utilisée pour déposer directement le métal sur la poudre de zéolithe, avant son mélange éventuel avec une matrice.

Le dépôt éventuel d'élément (des éléments) des groupes lB et VIII est suivi en général d'une calcination sous air ou oxygène, généralement entre 300 et 600°C, de préférence entre 350 et 550°C, et pour une durée comprise entre 0,5 et 10 heure(s), de préférence entre 1 et 4 heure(s).

Dans le cas où le catalyseur contient plusieurs métaux, ces derniers peuvent être introduits soit tous de la même façon soit par des techniques différentes, avant ou après mise en forme et dans n'importe quel ordre. Dans le cas où la technique utilisée est celle de l'échange ionique, plusieurs échanges successifs peuvent être nécessaires pour introduire les quantités requises de métaux.

Les conditions opératoires mises en oeuvre sont très variables en fonction de la réaction envisagée, de la nature de la charge, de la qualité des produits désirés et des installations dont dispose le raffineur ou le pétrochimiste.
Température de réaction 100 → 850° C
Pression entre 0,1 → 25 MPa, en présence ou en absence d'hydrogène.

La présente invention concerne aussi tout procédé d'utilisation du catalyseur selon l'invention en conversion d'hydrocarbures.

Les exemples suivants illustrent la présente invention sans toutefois en limiter la portée.

### Exemple 1 : Préparation de la zéolithe H-IM-5/1 selon l'invention

La matière première utilisée est une zéolithe IM-5, qui possède un rapport atomique Si/Al global égal à 11,1, une teneur pondérale en sodium correspondant à un rapport atomique Na/Al égal à 0,031. Cette zéolithe IM-5 a été synthétisée d'après la demande de brevet français FR 2 754 809 A.

Cette zéolithe IM-5 subit tout d'abord une calcination dite sèche à 550°C sous flux d'air et d'azote durant 6 heures. Puis, le solide obtenu est soumis à un échange ionique dans une solution de NH₄NO₃ 10N, à environ 100°C pendant 4 heures. La zéolithe IM-5 est alors soumise à un traitement par une solution d'acide nitrique 4N, à environ 100°C, pendant 5 heures. Le volume V de la solution d'acide nitrique engagé (en ml) est égal à 10 fois le poids P de zéolithe IM-5 sèche (V/P=10). Ce traitement par une solution d'acide nitrique 6N est réalisé une seconde fois dans les mêmes conditions opératoires.

A l'issue de ces traitements, la zéolithe obtenue est référencée H-IM-5/1. Elle se trouve sous sa forme H et possède un rapport Si/Al atomique global égal à 31,5, et un rapport atomique Na/Al inférieur à 0,001.

### Exemple 2 Préparation du catalyseur C1 conforme à l'invention

La zéolithe H-IM-5/1 obtenue à l'exemple 1 est ensuite utilisée pour préparer un catalyseur un additif A2 et un catalyseur C2 selon le même mode opératoire que celui décrit dans l'exemple 2.

### Exemple 3 : Préparation de la zéolithe H-IM-5/2 conforme à l'invention

La matière première utilisée dans cet exemple est la zéolithe IM-5 est la même zéolithe NH4-IM-5 préparée dans l'exemple 1 de la présente invention. La zéolithe NH4-IM-5 est alors soumise à un traitement hydrothermique, en présence de 100% de vapeur d'eau à 650°C, durant 4 heures. La zéolithe subit alors une attaque acide, à l'aide d'acide nitrique 6N, à environ 100°C, pendant 4 heures, de manière à extraire les espèces aluminiques extra-réseau formées lors du traitement hydrothermique. Le volume V de la solution d'acide nitrique engagé (en ml) est égal à 10 fois le poids P de zéolithe IM-5 sèche (V/P=10).

A l'issue de ces traitements, la zéolithe H-IM-5/2 sous forme H posséde un rapport Si/Al atomique global égal à 28,2 et un rapport Na/Al inférieur à 0,001.

### Exemple 4: Evaluation des performances catalytiques en craquage du méthylcyclohexane des solides H-IM-5/1 et H-IM-5/2 conformes à l'invention.

Les zéolites H-IM-5/1 et H-IM-5/2 sont mises en forme par pastillage, suivi d'un tamisage dont le but est de recueillir une fraction granulométrique comprise entre 40 et 200 µm.

Les conditions opératoires des tests catalytiques sont les suivantes :
1 gramme de zéolite H-IM-5, précédemment décrite, est introduite dans un réacteur à lit fixe tubulaire. La température du réacteur est portée à 500°C, puis le méthylcyclohexane est introduit dans le réacteur. Le gaz diluant utilisé est de l'azote et le rapport molaire N₂/Méthylcyclohexane admis dans le réacteur est de 12. La vitesse spatiale du méhylcyclohexane, c'est-à-dire la masse de méthylcyclohexane utilisé par unité de masse de zéolite H-IM-5 et par unité de temps, est de 55 h⁻¹. Les taux de conversion obtenus sont regroupés dans le tableau ci-après pour les solides H-IM-5/1, H-IM-5/2.

| | H-IM-5/1 | H-IM-5/2 |
|---|---|---|
| Conversion du méthylcyclohexane (% poids) | 49 | 53 |

Les mesures de conversion du méthylcyclohexane sont effectuées après 5 minutes de temps de réaction.

Ainsi les zéolites IM-5 désaluminées ont une activité catalytique.

## Revendications

1. Zéolithe IM-5, comprenant du silicium et au moins un élément T choisi dans le groupe formé par l'aluminium, le fer, le gallium, et le bore, **caractérisée en ce qu'**elle a été désaluminée et **en ce qu'**elle possède un rapport Si/T atomique global supérieur à 10.

2. Zéolithe selon la revendication 1 telle que ledit élément T est l'aluminium.

3. Zéolithe selon l'une des revendications 1 ou 2 telle que le rapport atomique Si/T est supérieur à 15.

4. Zéolithe selon l'une des revendications 1 à 3 telle que le rapport atomique Si/T est compris entre 20 et 400.

5. Procédé de préparation de la zéolithe selon l'une des revendications 1 à 4 dans laquel on soumet une zéolithe IM-5 calcinée à une attaque acide directe.

6. Procédé de préparation de la zéolithe selon l'une des revendications 1 à 4 dans laquel on soumet une zéolithe IM-5 calcinée à un traitement thermique et une attaque acide.

7. Procédé de préparation selon la revendication 6 telle que le traitement thermique est effectué en présence de vapeur d'eau.

8. Procédé de préparation selon l'une des revendications 5 à 7 dans lequel la zéolithe IM-5 calcinée est formée par calcination d'une zéolithe IM-5 sous flux d'air sec entre environ 450°C et 500°C et dans lequel l'attaque acide comprend le traitement avec une solution aqueuse d'un acide minéral ou d'un acide organique.

9. Catalyseur comprenant au moins une matrice et au moins une zéolithe selon l'une des revendications 1 à 4 ou préparée selon l'une des revendications 5 à 8, au moins en partie sous forme acide.

10. Catalyseur selon la revendication 9 comportant en outre un élément des groupes IB et VIII de la Classification Périodique des Eléments.

11. Catalyseur selon la revendication 10 tel que ledit élément est choisi dans le groupe formé par Ag, Ni et Pt.

12. Catalyseur selon l'une des revendications 9 à 11 tel que la matrice est choisie parmi les éléments du groupe formé par les argiles, la magnésie, les alumines, les silices, l'oxyde de titane, l'oxyde de bore, la zircone, les phosphates d'aluminium, les phosphates de titane, les phosphates de zirconium, les silice-alumines et le charbon.

13. Préparation du catalyseur selon l'une des revendications 9 à 12 par mélange de la matrice et de la zéolithe puis par mise en forme.

14. Utilisation du catalyseur selon l'une des revendications 9 à 12 dans un procédé de conversion d'hydrocarbures.

## Claims

1. A IM-5 zeolite comprising silicon and at least one element T selected from the group formed by aluminium, iron, gallium, and boron, **characterized in that** it has been dealuminated and **in that** it has a global Si/T atomic ratio of more than 10.

2. A zeolite according to claim 1, in which said element T is aluminium.

3. A zeolite according to claim 1 or claim 2, in which the Si/T atomic ratio is more than 15.

4. A zeolite according to any one of claims 1 to 3, in which the Si/T atomic ratio is in the range 20 to 400.

5. Process of preparation of a zeolite according to any one of claims 1 to 4, comprising using a direct acid attack method of a calcinated IM-5 zeolite.

6. Process of preparation of a zeolite according to any one of claims 1 to 4, comprising using a heat treatment plus direct acid attack method of a calcinated IM-5 zeolite.

7. Process of preparation according to claim 6, in which the heat treatment is carried out in the presence of steam.

8. Process of preparation according to any one of claims 5 to 7, in which the calcinated IM-5 zeolite is made by calcination of an IM-5 zeolite under dry air stream between about 451°C and 500°C and in which the acid attack comprises the treatment with an aqueous solution of a mineral acid or an organic acid.

9. A catalyst comprising at least one matrix and at least one zeolite according to any one of claims 1 to 4 or prepared according to any one of claims 5 to 8, at least partially in its acid form.

10. A catalyst according to claim 9, further comprising an element from groups IB and VIII of the periodic table.

11. A catalyst according to claim 10, in which said element is selected from the group formed by Ag, Ni and Pt.

12. A catalyst according to any one of claims 9 to 11, in which the matrix is selected from the group formed by clays, magnesia, aluminas, silicas, titanium oxide, boron oxide, zirconia, aluminium phosphates, titanium phosphates, zirconium phosphates, silica-aluminas and coal.

13. Preparation of a catalyst according to any one of claims 9 to 12 by mixing a matrix and a zeolite then forming.

14. Use of a catalyst according to any one of claims 9 to 12 for the conversion of hydrocarbons.

## Patentansprüche

1. IM-5 Zeolith, der Silizium und wenigstens ein Element T umfasst, das aus der durch Aluminium, Eisen, Gallium und Bor gebildeten Gruppe gewählt ist, **dadurch gekennzeichnet, dass** er desaluminiert worden ist und dass er ein atomares Si/T-Gesamtverhältnis größer als 10 besitzt.

2. Zeolith nach Anspruch 1, derart, dass das Element T Aluminium ist.

3. Zeolith nach einem der Ansprüche 1 oder 2, derart, dass das Si/T-Atomverhältnis größer als 15 ist.

4. Zeolith nach einem der Ansprüche 1 bis 3, derart, dass das Atomverhältnis Si/T zwischen 20 und 400 liegt.

5. Verfahren zur Herstellung des Zeolithen nach einem der Ansprüche 1 bis 4, in dem ein kalzinierter IM-5 Zeolith einem direkten Säureangriff unterzogen wird.

6. Verfahren zur Herstellung des Zeolithen nach einem der Ansprüche 1 bis 4, in dem ein kalzinierter IM-5 Zeolith einer thermischen Behandlung und einem Säureangriff unterzogen wird.

7. Verfahren zur Herstellung nach Anspruch 6, derart, dass die thermische Behandlung in Gegenwart von Wasserdampf durchgeführt wird.

8. Verfahren zur Herstellung nach einem der Ansprüche 5 bis 7, in dem der kalzinierte IM-5 Zeolith durch Kalzinierung eines IM-5 Zeolithen unter Trockenluftstrom zwischen 450°C und 550°C gebildet wird, und in dem der Säureangriff die Behandlung mit einer wässrigen Lösung von einer mineralischen Säure oder einer organischen Säure umfasst.

9. Katalysator, der wenigstens eine Matrix und wenigstens einen Zeolithen nach einem der Ansprüche 1 bis 4 oder hergestellt nach einem der Ansprüche 5 bis 8 wenigstens teilweise in saurer Form umfasst.

10. Katalysator nach Anspruch 9, der im übrigen ein Element der Gruppen IB und VIII des Periodensystems der Elemente umfasst.

11. Katalysator nach Anspruch 10, derart, dass dieses Element aus der durch Ag, Ni und Pt gebildeten Gruppe gewählt ist.

12. Katalysator nach einem der Ansprüche 9 bis 11, derart, dass die Matrix unter den Elementen der durch die Tone Magnesiumoxid, Aluminiumoxide, Siliziumoxide, Titanoxid, Boroxid, Zirkoniumoxid, Aluminiumphosphate, Titanphosphate, Zirkoniumphosphate, Silizium-Aluminiumoxide und Kohle gebildeten Gruppe gewählt ist.

13. Herstellung des Katalysators nach einem der Ansprüche 9 bis 12 durch Vermischen der Matrix und des Zeolithen und anschließendes Formen.

14. Verwendung des Katalysators nach einem der Ansprüche 9 bis 12 in einem Verfahren zur Umwandlung von Kohlenwasserstoffen.
